# EUROPÄISCHE PATENTSCHRIFT

(11) **EP 0 563 529 B1**
(45) Veröffentlichungstag und Bekanntmachung des Hinweises auf die Patenterteilung: **23.07.1997**
(21) Anmeldenummer: 93101574.7
(22) Anmeldetag: 02.02.1993
(51) Int. Cl.: G05D 23/185

(54) **Thermostatsystem und hiermit versehener Heizkörper**
Thermostatic system and heating body using the same
Système thermostatique et radiateur muni de celui-ci

(30) Priorität: 31.03.1992 DE 4210656
(43) Veröffentlichungstag der Anmeldung: 06.10.1993
(73) Patentinhaber: KERMI GmbH, D-94447 Plattling (DE)
(72) Erfinder: Fonfara, Harald, W-8351 Lalling (DE); Blab, Reinhard, W-8352 Grafenau (DE)
(74) Vertreter: Schwabe - Sandmair - Marx

(56) Entgegenhaltungen:
- EP-A- 0 061 597
- DE-A- 2 021 545
- DE-A- 2 645 472
- DE-U- 9 014 139
- JP-B-60 168 500

## Beschreibung

Die Erfindung betrifft ein Thermostatregelsystem für Heizungsventile nach dem Oberbegriff des Patentanspruchs 1. Ein derartiges Thermostatsystem ist beispielsweise aus der DE-GM 90 14 139 bekannt. Ferner betrifft die Erfindung einen Heizkörper mit einem Heizungsventil-Thermostatregelsystem nach dem Patentanspruch 8.

Bei dem bekannten Thermostatsystem dient die Betätigungsvorrichtung nicht nur zur Sollwert-Einstellung, sondern ist mit dem Fühler vereinigt. Es handelt sich daher um einen sogenannten. Fernfühler und eine (damit kombinierte) Fern-Sollwerteinstellung, da sowohl Fühler als auch Sollwerteinstellung getrennt, also entfernt von der direkt das Heizungsventil beaufschlagenden Arbeitsvorrichtung angeordnet sind. Da in dieser Druckschrift die Arbeitseinrichtung nicht näher beschrieben ist, bleibt offen, wo die Arbeitsvorrichtung und das Heizungsventil am Heizkörper angeordnet sind.

Die Betätigungsvorrichtung soll bei dem bekannten Thermostatsystem beispielsweise an der Raumwand befestigt werden. Dies ist allerdings aus innenarchitektonischen Gründen häufig ungünstig und daher unerwünscht, da der betreffende Wandabschnitt nicht als Stellwand für Möbel und dergleichen zur Verfügung steht. Häufig sind Heizkörper auch in Fensterwänden in einer Nische unterhalb der Fensterbank angeordnet, so daß nur neben der Heizkörpernische (unterhalb der Fensterbank) überhaupt Wandfläche zur Verfügung steht, wo die bekannte Betätigungsvorrichtung angebracht werden könnte. Die üblicherweise allerdings relativ kurzen, die Nische an den Enden abschließenden Wandflächen sind allerdings häufig genau die Wandflächen, vor denen später Gardinen hängen. Wird die Betätigungsvorrichtung durch eine Gardine mehr oder weniger verdeckt, so kann der Fühler nicht mehr ordnungsgemäß die Temperatur der Raumluft anzeigen.

Bei der bekannten Betätigungsvorrichtung ist zur Sollwerteinstellung ein Einstelldrehknopf vorgesehen, der ein aus einer topfförmigen Kapsel und einem Gehäuseboden bestehendes Gehäuse umgibt. Eine derartige Vorrichtung weist eine relativ hohe Bauhöhe auf, die störend ist; darüber hinaus kann das Abstehen des bekannten Einstelldrehknopfs von der Wand dazu führen, daß der Einstelldrehknopf leicht durch vorübergehende Personen oder durch Hantieren mit Gegenständen beschädigt werden kann. Derartige Probleme sind besonders bedeutsam bei Räumen mit Publikumsverkehr, etwa bei Schulen und anderen öffentlichen Gebäuden.

Aus Harald Bitter, "Thermostatventile - neue technische Erkenntnisse für den wirtschaftlichen Einsatz in modernen Heizungsanlagen", WEKA-VERLAG, Fachverlag für Verwaltung und Industrie, S. 144 - 151 (1982), sind die grundsätzlich verwendeten vier verschiedenen Bauarten von Thermostatreglern bekannt. Die am häufigsten eingesetzte Bauart kombiniert die das Heizungsventil direkt beaufschlagende Arbeitseinrichtung mit dem Fühler und dem Sollwerteinsteller; diese drei Bauteile bilden eine Baueinheit und sind mit dem Ventilkörper fest verbunden. Bei einer weiteren bekannten Bauart wird ein sogenannter Fernfühler verwendet, so daß also die Sollwert-einstellung fest mit der Arbeitseinrichtung verbunden ist.

Wie bereits voranstehend anhand der DE-GM 90 14 139 beschrieben, ist bei einer dritten bekannten Bauart die Arbeitseinrichtung am Heizungsventil vorgesehen, und entfernt hiervon sind als kombinierte Baueinheit eine Fern-Sollwerteinstellung und ein Fernfühler vorgesehen. Die vierte bekannte Bauart stellt einen Thermostatregler zur Verfügung, bei welchem ein Fernfühler und ein hiervon getrennter Fern-Sollwerteinsteller vorgesehen sind, die beide von der Arbeitseinrichtung entfernt angeordnet sind, die das Heizungsventil direkt beaufschlagt.

Ein grundsätzlich zu der voranstehend ganannten vierten Bauart analoges Thermostatsystem ist aus der DE-A-2 021 545 bekannt. Allerdings dient das dort beschriebene Thermostatsystem nicht zum Regeln von Heizungsventilen (bei denen ein Fühler die Raumlufttemperatur feststellt), sondern offenbar zu anderen Regelzwecken, da bei der in der DE-OS 20 21 545 beschriebenen Vorrichtung der Fühler zum Einbau in einen Flüssigkeitsbehälter ausgebildet ist.

Aus der voranstehenden Schilderung des Stands der Technik wird deutlich, daß nach dem Stand der Technik bislang die Sollwertversteller immer in Form eines Drehknopfes ausgebildet waren, unabhängig davon, ob sie bei einem Thermostatsystem in Kombibauweise vorgesehen waren (Arbeitseinrichtung, Fühler und Sollwertversteller kombiniert), oder ob ein FernSollwertversteller vorgesehen war. Offenbar rührt die Bauausführung bekannter Sollwertversteller als Drehknöpfe von den früher verwendeten Drehknöpfen zur direkten Ventilbetätigung (ohne Thermostatregelung) von Heizkörpern her.

Allerdings erfordern Drehknöpfe zur Sollwerteinstellung einen nicht unbeträchtlichen Raum; sie müssen zur Betätigung nämlich eine nicht unbeträchtliche Strecke vorstehen, bei Anbringung an einem Heizkörper oder einer Heizkörperverkleidung nach vorn oder zur Seite, was gegenüber dem "nackten" Heizkörper (ohne Sollwertgeber) eine größere Tiefe oder Breite von Wandeinbaunischen erfordert, oder die bekannten Sollwerteinsteller werden, wie voranstehend ausgeführt, auf einer Wand angebracht und sind hierdurch schwierig zu installieren und anfällig für Beschädigungen.

Die JP-A-60-168500 offenbart eine beheizbare Einrichtung zur Bearbeitung von Textilien, d.h. ein Bügeleisen, daß einen Schieberegler aufweist. Dieser Schieberegler wird verwendet, um eine Einstellung am Bügeleisen vorzunehmen, die keinen bemerkenswerten Kraftaufwand erfordert.

Der Erfindung liegt die Aufgabe zugrunde, das bekannte Thermostatsystem weiter zu entwickeln und ein verbessertes Thermostatsystem zur Verfügung zu stellen, welches universeller einsetzbar und weniger beschädigungsanfällig ist.

Die Aufgabe wird gemäß der vorliegenden Erfindung durch ein System zum Regeln von Heizungsventilen mit den im Patentanspruch 1 aufgeführten Merkmalen gelöst bzw. durch einen Heizkörper mit den im Patentanspruch 8 aufgeführten Merkmalen.

In überraschender Abkehr von einem lange bekannten und immer noch praktizierten Stand der Technik wird daher gemäß der vorliegenden Erfindung statt eines Drehknopfes ein Flachbahnsteller als Betätigungsvorrichtung für die Sollwerteinstellung eingesetzt. Ein derartiger Flachbahnsteller läßt sich aufgrund seiner flachen Bauweise einfach auf einer Wandoberfläche anbringen, ohne allzuweit vorzustehen, und ist daher erheblich weniger beschädigungsanfällig als die bislang verwendeten DrehknopfSollwertsteller. Aufgrund seiner flachen Bauweise eignet sich der erfindungsgemäße Flachbahnsteller auch besonders gut zur Anbringung an einem Heizkörper, insbesondere einer Heizkörperverkleidung, und zwar auch beim Einbau des (verkleideten oder unverkleideten) Heizkörpers in einer Nische. Der Flachbahnsteller kann seitlich oder vorn am Heizkörper oder der Heizkörperverkleidung angebracht werden, ohne daß zu diesem Zweck das Nischenmaß über die zur Aufnahme des Heizkörpers bzw. der Verkleidung an sich erforderlichen Abmessungen vergrößert werden müßte.

Der erfindungsgemäße Flachbahnsteller ist mit einem linear bewegbaren Schieber versehen, dessen Linearbewegung proportional hierzu in eine Kraft umsetzbar ist, die einen Balg beaufschlagt, an den das Kapillarrohr angeschlossen ist. Ein Schieber läßt sich verhältnismäßig leicht betätigen, üblicherweise mit zwei Fingern, und daher erheblich einfacher als Drehknöpfe nach dem Stand der Technik. Vorzugweise dient der linear bewegbare Schieber gleichzeitig als Anzeigeelement auf einer linearen Skala für die unterschiedlichen Sollwerte. Eine derartige lineare Skala läßt sich einfach auch noch aus größerer Entfernung ablesen; bei der Sollwert-Einstellung mittels Drehknöpfen nach dem Stand der Technik befinden sich dagegen häufig die Skalen am Außenumfang eines Gehäuses, gegenüber dem der Drehknopf oder ein entsprechender Ring verdrehbar ist, und daher ist beim Stand der Technik häufig eine zufriedenstellende Skalenablesung nur aus der Nähe und bei einer schrägen Aufsicht möglich.

Bei einer vorteilhaften Ausführungsform der Erfindung ist vorgesehen, daß der Schieber mit einer Stange verbunden ist, deren eines Ende an einem Drehgelenk angelenkt ist, und entlang der Stange längsverschiebbar angelenkt ist, so daß die Stange proportional zur Linearverschiebung des Schiebers um das Drehgelenk in einer Richtung im wesentlichen senkrecht zur Linearverschiebungsrichtung so verschwenkt wird, daß der Balg proportional zur Linearbewegung kraftbeaufschlagt wird. Durch die Wahl der einzelnen Glieder eines derartigen Hebelsystems läßt sich auf einfache Weise eine optimale Umsetzung der Linearbewegung des Schiebers in die zur Balgbeaufschlagung erforderliche Kraft vorsehen.

Vorzugsweise weist der erfindungsgemäße Flachbahnsteller ein im wesentlichen flaches Gehäuse auf, welches geringe Abmessungen in einer Richtung senkrecht zur Ebene hat, in welcher die Linearbewegung des Schiebers erfolgt.

Wenn das Gehäuse des Flachbahnstellers zur Anbringung an einer oder zur Integration in eine Heizkörperverkleidung ausgebildet ist, so ergeben sich besondere Vorteile. Zunächst einmal bietet eine moderne Heizkörperverkleidung zahlreiche Stellen, an denen der erfindungsgemäße Flachbahnsteller angebracht werden kann, beispielsweise auf der vorderen Verkleidungsplatte (die dem zu beheizenden Raum zugewandt ist), oder etwa an der Seite. Darüber hinaus ist es nicht mehr erforderlich, den erfindungsgemäßen Flachbahnsteller zur Sollwerteinstellung etwa an einer Wandfläche des Raumes anzubringen, wo häufig keine geeignete Fläche zur Verfügung steht oder aber eine Anbringung aus sonstigen, insbesondere innenarchitektonischen Gründen zumindest unerwünscht ist. Dennoch kann selbstverständlich, falls dies aus irgendwelchen Gründen in einem speziellen Fall gewünscht sein sollte, auch der erfindungsgemäße Flachbahnsteller irgendwo auf einer Wand befestigt werden; hierzu ist es ausreichend, entsprechende Befestigungslöcher etwa an der Rückseite des Gehäuses des Flachbahnstellers vorzusehen.

Vorzugsweise sind gemäß der vorliegenden Erfindung die Arbeitseinrichtung und/oder der Fühler zur Anbringung unten an einem Heizkörper ausgebildet. Wenn der Raumluftfühler nämlich unten am Heizkörper angebracht ist, so wird er von der dort ankommenden, verhältnismäßig kühlen Luft beaufschlagt, und ermittelt daher die Temperatur der Raumluft, wogegen bei einer Anbringung des Fühlers oben am Heizkörper dieser von bereits erwärmter Luft beaufschlagt wird.

Zur Anpassung an unterschiedliche Entfernungen zwischen der Arbeitseinrichtung und der Betätigungsvorrichtung ist vorzugsweise ein Abschnitt des Kapillarrohres zu einer Rolle aufgewickelt, und kann je nach der in einer konkreten Einbausituation gegebenen Entfernung mehr oder weniger von der Rolle abgewickelt werden. Hierzu kann die Kapillarrohr-Rolle am Gehäuse des Flachbahnstellers vorgesehen sein. Dies gilt besonders in einem Fall, in welchem das Gehäuse des Flachbahnstellers an einer Heizkörperverkleidung angebracht werden soll, bei welcher genügend Platz (auf der Rückseite des Gehäuses) für die Kapillarohr-Rolle vorhanden ist. Für andere Einbausituationen, etwa für eine Befestigung des Gehäuses des Flachbahnstellers auf einer Wand, kann die Kapillarohr-Rolle auch getrennt vom Gehäuse vorgesehen werden, wenn man etwa vermeiden will, bei einem Wandeinbau eine Leerdose zur Aufnahme der Kapillarrohr-Rolle setzen zu müssen.

Wie aus den voranstehenden Ausführungen im Zusammenhang mit der vorliegenden Erfindung deutlich wird, bietet ein mit dem erfindungsgemäßen Thermostatsystem versehener Heizkörper zahlreiche Vorteile. Insbesondere läßt sich hierdurch ein Heizkörper, insbesondere ein mit einer Verkleidung versehener Heizkörper zur Verfügung stellen, der bereits mit einem vormontierten Thermostatsystem an der Baustelle ankommt, wobei die mit dem erfindungsgemäßen Flachbahnsteller als Betätigungsvorrichtung für den Sollwert versehene Heizkörperverkleidung keine größeren Abmessungen für den Heizkörpereinbau erfordert als bislang. Daher läßt sich der neue erfindungsgemäße Heizkörper auch zum Austausch einsetzen.

Vorzugsweise ist der erfindungsgemäße Heizkörper so ausgebildet, daß unten am Heizkörper zumindest ein ins Innere des Heizkörpers ragender Anschluß für das Heizungsventil und die Arbeitseinrichtung vorgesehen ist, sowie ein nach außen ragender Anschluß für eine Belüftungsvorrichtung. Dem liegt die Erkenntnis zugrunde, daß ja die Arbeitseinrichtung und das Heizungsventil nicht mehr von außen betätigt werden müssen und daher ruhig nach innen in den Heizkörper ragen können. Dann kann an dieser Stelle, von außen zugänglich, eine Entleerungsvorrichtung vorgesehen werden, die von außen frei zugänglich ist.

Die Erfindung wird nachstehend anhand zeichnerisch dargestellter Ausführungsbeispiele näher erläutert, aus welchen weitere Vorteile und Merkmale hervorgehen. Es zeigt:
- Fig. 1: eine Ansicht eines erfindungsgemäßen Flachbahnstellers;
- Fig. 2: einen vertikalen Schnitt durch einen Flachbahnsteller gemäß Fig. 1;
- Fig. 3: eine Aufsicht auf einen Abschnitt einer Heizkörperverkleidung mit eingebautem Flachbahnsteller;
- Fig. 4: einen Vertikalschnitt durch einen ähnlich aufgebauten Flachbahnsteller wie in Fig. 2, jedoch mit größerem Betätigungshub für einen Metallbalg;
- Fig. 5: eine Aufsicht auf eine schematisch dargestellte Heizkörperverkleidung mit einem seitlich angebrachten Flachbahnsteller;
- Fig. 6: eine Aufsicht auf eine schematisch dargestellte Heizkörperverkleidung mit einem vorn rechts angebrachten Flachbahnsteller;
- Fig. 7: eine Aufsicht auf eine schematisch dargestellte Heizkörperverkleidung mit einem rechts angebrachten Flachbahnsteller (ähnlich wie in Fig. 5), wobei jedoch ein Anzeigeelement von der Seite aus nach vorn geführt ist; und
- Fig. 8: eine Vorderansicht einer Heizkörperverkleidung mit schematisch stark vereinfacht gezeigten, dahinter angeordneten Bauteilen.

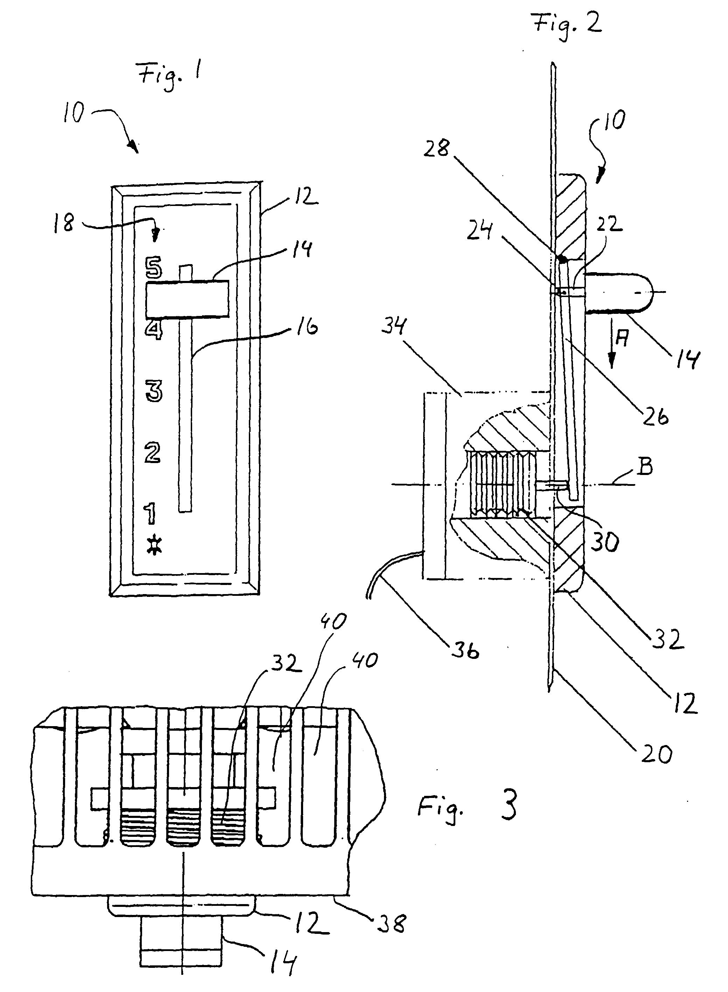

Ein in Fig. 1 insgesamt mit der Bezugsziffer 10 bezeichneter Flachbahnsteller als Betätigungsvorrichtung für die Sollwert-Einstellung bei einem Thermostatsystem weist ein Gehäuse 12 auf, in welchem zentral ein Schlitz 16 vorgesehen ist, entlang dem ein Schieber 14 linear gleitverschieblich gelagert ist. Der Schieber 14 dient gleichzeitig als Marke auf einer linearen Skala 18, die beispielsweise für die Sollwert-Einstellung Werte von 1 bis 5 aufweist. In Fig. 1 ist die durch den Schieber 14 angezeigte Sollwert-Einstellung 4,5. Selbstverständlich kann die Skala 18 auch beispielsweise in °C unterteilt sein.

Fig. 2 verdeutlicht den Aufbau des erfindungsgemäßen Flachbahnstellers. Auf einem Trägerkörper 20, der vorteilhafterweise als Trägerplatte ausgebildet ist, sitzt das relativ flach gehaltene Gehäuse 12.

Der Schieber 14 ist mit einem Stift 22 verbunden, der über ein Schiebelager 24, eine Schiebemuffe oder dergleichen, an einer Stange 26 verschieblich angelenkt ist, die um ein sich an ihrem einen Ende angebrachtes Gelenk 28 verschwenkbar ist.

An ihrem anderen Ende beaufschlagt die Stange 26 einen Stift 30, der auf einen Metallbalg 32 drückt, an den ein Kapillarrohr 36 angeschlossen ist. Um den Metallbalg 32 herum ist das Kapillarrohr 36 zu einer Kapillarrohr-Rolle 34 aufgewickelt, bevor es zur Arbeitseinrichtung geht.

Eine Bewegung des Schiebers 14 in der in Fig. 2 mit "A" bezeichneten Richtung führt daher zu einem zunehmenden Druck auf den Metallbalg 32, und zwar über den in Axialrichtung "B" des Metallbalges wirkenden Stift 30. Dieses Hebelwerk läßt sich einfach an unterschiedliche Erfordernisse anpassen, so daß jederzeit durch entsprechende Wahl der Hebelübersetzungen sowohl eine einfache Bedienbarkeit des Schiebers 14, eine gute Ablesbarkeit der Skala 18 und ein ausreichender Betätigungsdruck für den Metallbalg 32 erreichbar sind.

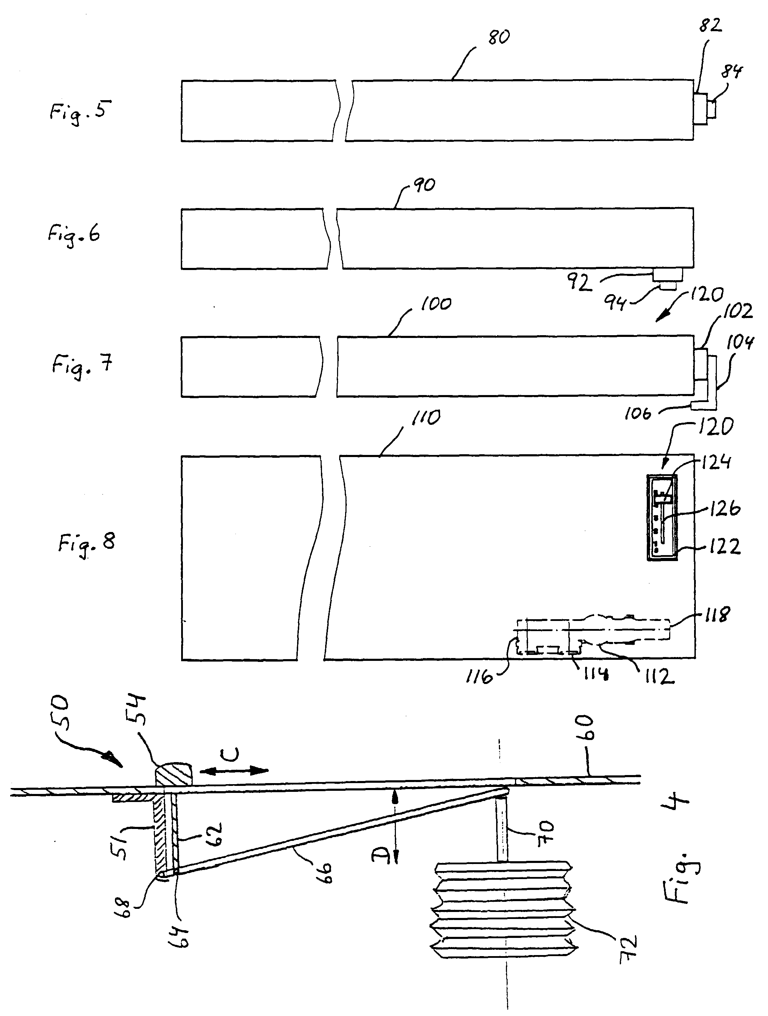

Fig. 3 verdeutlicht in einer Aufsicht, wie der erfindungsgemäße Flachbahnsteller unauffällig praktisch in einer Heizkörperverkleidung verschwindet, von welcher im wesentlichen nur die obere Deckplatte 38 mit mehreren Zirkulationsöffnungen 40 dargestellt ist.

Fig. 4 zeigt in einer Fig. 2 entsprechenden Schnittdarstellung einen weiteren Flachbahnsteller 50 gemäß der vorliegenden Erfindung. Während bei dem in Fig. 2 gezeigten Flachbahnsteller sich das Hebelwerk überwiegend im nach außen vorspringenden Teil des Gehäuses 12 befindet, und wegen der geringen Bauhöhe des Gehäuses 12 daher der Hubweg des Stabes 30 nicht allzu groß ist, soll bei der in Fig. 4 gezeigten Ausführungsform des Flachbahnstellers 50 ein größerer Hub zur Beaufschlagung des Metallbalges erzielt werden. Dennoch ist bei dieser Ausführungsform gemäß Fig. 4, also trotz des größeren Hubes, die Bauhöhe, also das Vorsprungmaß des Schiebers, geringer als bei der in Fig. 2 gezeigten Ausführungsform. Dies liegt darin, daß bei der Ausführungsform gemäß Fig. 4 das Hebelwerk im wesentlichen auf der Gehäuserückseite angeordnet ist; diese Ausführungsform eignet sich daher besonders für den Einbau in beispielsweise eine Heizkörperverkleidung.

In Fig. 4 sind den in Fig. 2 gezeigten Teilen entsprechende Teile mit entsprechenden Bezugsziffern bezeichnet. Ein Schieber 54 ist mit einem Stift 62 verbunden, der über ein Schiebelager 64 an einer längeren Stange 66 angelenkt ist. Die Stange 66 ist über ein Gelenk 68 verschwenkbar. Das Gelenk 68 ist an einem Ende eines L-förmigen Stützteils 51 angeordnet, dessen anderer Schenkel auf nicht gezeigte Weise an einem Trägerkörper (Trägerplatte) 60 befestigt ist.

Bei einer Linearbewegung des Schiebers 54, also in der durch einen Doppelpfeil "C" in Fig. 4 bezeichneten Richtung, bewegt sich das freie Ende der Stange 66 entsprechend und beaufschlagt so über einen Stift 70 einen Metallbalg 72. Bei einer Bewegung des Schiebers 54 vom oberen bis zum unteren Ende des Schlitzes in Fig. 4 wird daher der Metallbalg 72 um die gesamte Entfernung "D" komprimiert bzw. wieder expandiert. Dieser Hubweg "D" ist erheblich größer als der Hubweg des Flachbahnstellers 10 in Fig. 2, wo praktisch nur die Gehäusetiefe des Gehäuses 12 zur Verfügung steht.

Die Fig. 5 bis 7 zeigen einige typische Einbausituationen für Flachbahnsteller gemäß der vorliegenden Erfindung. Bei der in Fig. 5 gezeigten Aufsicht auf eine Heizkörperverkleidung 80 ist das Gehäuse 82 eines Flachbahnstellers seitlich an der Heizkörperverkleidung 80 angeordnet. Der Schieber 84 des Flachbahnstellers ist daher von der Seite zugänglich und ablesbar.

Die in Fig. 6 gezeigte Einbausituation eines Flachbahnstellers in eine Heizkörperverkleidung 90 entspricht der Einbausituation gemäß Fig. 3. Vorn rechts an einer Heizkörperverkleidung 90 ist ein erfindungsgemäßer Flachbahnsteller angebracht, dessen Gehäuse mit der Bezugsziffer 92 und dessen Schieber mit der Bezugsziffer 94 bezeichnet ist.

Eine ähnliche Ausführungsform wie in Fig. 5 ist in Fig. 7 dargestellt, jedoch mit einer anderen Anzeigevorrichtung bzw. einem etwas anders ausgebildeten Schieber. An der rechten Seite der in Fig. 7 gezeigten Heizkörperverkleidung 100 ist wiederum ein Gehäuse 102 eines erfindungsgemäßen Flachbahnstellers angeordnet, dessen Schieber mit der Bezugsziffer 104 bezeichnet ist. Dieser Schieber 104 ist jedoch (im Vergleich zum Schieber 84 in Fig. 5) nach vorne verlängert und weist dort ein Querstück 106 auf, welches als Marke oder Zeiger für eine (nicht dargestellte) Skala dient. Daher ist auch bei der Ausführungsform gemäß Fig. 7 die Stellung des Schiebers 104, 106 auf einfache Weise von der Vorderseite des Heizkörpers bzw. der Heizkörperverkleidung 100 feststellbar. Für unterschiedliche Einbausituationen könnte auch die Schieberausführung 104, 106 von Fig. 7 so ausgebildet sein, daß sie anstelle des Schiebers 84 von Fig. 5 eingesetzt werden kann; der übrige Teil des Flachbahnstellers könnte dann unverändert bleiben.

Fig. 8 zeigt eine Vorderansicht eines Heizkörpers 110 mit oder ohne Verkleidung. Unten rechts am Heizkörper 110 ist schematisch stark vereinfacht ein Heizungsventil 112 gezeigt, welches direkt von der Arbeitseinrichtung 114 beaufschlagt wird. Mit dieser vereinigt ist ein Fühler 116 vorgesehen; die Arbeitseinrichtung 114 und der Fühler 116 erstrecken sich vom Ventil aus ins Innere des Heizkörpers. Nach außen ragend und von dort aus zugänglich ist eine Entleerungsvorrichtung 118 vorgesehen.

Oben an dem Heizkörper 110 bzw. an dessen zugehöriger vorderer Verkleidungsplatte ist ein Flachbahnsteller 120 gemäß der vorliegenden Erfindung angebracht, der ein Gehäuse 122 aufweist mit einem Schlitz 126, in welchem ein Schieber 124 längsverschieblich angeordnet ist. Das von dem Flachbahnsteller 120 zur Arbeitseinrichtung 114/ Fühler 116 führende Kapillarrohr ist in Fig. 8 nicht dargestellt.

## Patentansprüche

1. Heizungsventil-Thermostatregelsystem mit einer das Heizungsventil (112) direkt beaufschlagenden Arbeitseinrichtung (114), einem Fühler (116) für die Lufttemperatur und einer getrennt von der Arbeitseinrichtung (114) angeordneten, mit dieser über ein Kapillarrohr (36) verbundenen Betätigungsvorrichtung (10) zur Sollwerteinstellung, **gekennzeichnet durch** die folgenden Merkmale:
a) die Betätigungsvorrichtung ist als Flachbahnsteller (10) ausgebildet;
b) der Flachbahnsteller (10) weist einen linear bewegbaren Schieber (14) auf, dessen Linearbewegung proportional hierzu in eine Kraft umsetzbar ist, die einen Balg (32) beaufschlagt, an dem das Kapillarrohr (36) angeschlossen ist.

2. Heizungsventil-Thermostatregelsystem nach Anspruch 1, dadurch gekennzeichnet, daß der Schieber (14) mit einer Stange (26) verbunden ist, deren eines Ende an einem Drehgelenk (28) angelenkt ist, und entlang der Stange (26) längsverschiebbar angelenkt ist, so daß die Stange (26) proportional zur Linearverschiebung (A) des Schiebers (14) um das Drehgelenk (28) in einer Richtung (B) im wesentlichen senkrecht zur Linearverschiebungsrichtung (A) so verschwenkt wird, daß der Balg (32) proportional zur Linearbewegung kraftbeaufschlagt wird.

3. Heizungsventil-Thermostatregelsystem nach einem der Ansprüche 1 oder 2, dadurch gekennzeichnet, daß der Flachbahnsteller (10) ein im wesentlichen flaches Gehäuse (12) aufweist, das geringe Abmessungen in einer Richtung (B) senkrecht zur Ebene hat, in welcher die Linearbewegung des Schiebers (14) erfolgt.

4. Heizungsventil-Thermostatregelsystem nach Anspruch 3, dadurch gekennzeichnet, daß das Gehäuse (12) des Flachbahnstellers (10) zur Anbringung an einer oder zur Integration in eine Heizkörperverkleidung (38) ausgebildet ist.

5. Heizungsventil-Thermostatregelsystem nach einem der Ansprüche 1 bis 4, dadurch gekennzeichnet, daß die Arbeitseinrichtung (114) und/oder der Fühler (116) zur Anbringung unten an einem Heizkörper (110) ausgebildet ist bzw. sind.

6. Heizungsventil-Thermostatregelsystem nach einem der Ansprüche 1 bis 5, dadurch gekennzeichnet, daß ein Abschnitt des Kapillarrohrs (36) zu einer Rolle (34) aufgewickelt ist und zur Anpassung an unterschiedliche Entfernungen zwischen Arbeitseinrichtung und Betätigungsvorrichtung zumindest teilweise von der Rolle (34) abwickelbar ist.

7. Heizungsventil-Thermostatregelsystem nach Anspruch 6, dadurch gekennzeichnet, daß die Kapillarrohr-Rolle (34) am Gehäuse (12) des Flachbahnstellers (10) vorgesehen ist.

8. Heizkörper mit einem Heizungsventil-Thermostatregelsystem nach einem der Ansprüche 1 bis 7.

9. Heizkörper nach Anspruch 8, dadurch gekennzeichnet, daß unten am Heizkörper (110) zumindest ein ins Innere des Heizkörpers ragender Anschluß für das Heizungsventil (112) und die Arbeitseinrichtung (114) vorgesehen ist sowie ein nach außen ragender Anschluß für eine Entleerungsvorrichtung (118).

## Claims

1. A heating valve thermostatic control system having an operating device (114) directly acting on the heating valve (112), a sensor (116) for the air temperature and an actuating device (10), disposed separately from the operating device (114) and connected thereto via a capillary tube (36), for setting the desired value,
**characterised by** the following features:
a) the actuating device is constructed as a sliding control (10);
b) the sliding control (10) comprises a linearly movable slide (14), the linear movement of which can be converted in proportion thereto into a force which acts on a bellows (32) to which the capillary tube (36) is attached.

2. A heating valve thermostatic control system according to Claim 1,
**characterised in that** the slide (14) is connected to a rod (26), the one end of which is articulated to a hinge (28), and is articulated in longitudinally displaceable manner along the rod (26) so that the rod is swivelled proportionally to the linear displacement (A) of the slide (14) around the hinge (28) in a direction (B) substantially perpendicular to the direction (A) of linear displacement so that the bellows (32) are powered proportionally to the linear movement.

3. A heating valve thermostatic control system according to one of Claims 1 or 2,
**characterised in that** the sliding control (10) comprises a substantially flat housing (12), which has small dimensions in a direction (B) perpendicular to the plane in which the linear movement of the slide (14) occurs.

4. A heating valve thermostatic control system according to Claim 3,
**characterised in that** the housing (12) of the sliding control (10) is constructed for mounting on or for integration in a radiator casing (38).

5. A heating valve thermostatic control system according to one of Claims 1 to 4,
**characterised in that** the operating device (114) and/or the sensor (116) is or are constructed to be mounted at the bottom of a radiator (110).

6. A heating valve thermostatic control system according to one of Claims 1 to 5,
**characterised in that** a portion of the capillary tube (36) is coiled to form a reel (34) and to adapt to various distances between working device and actuating device can be uncoiled at least partially from the reel (34).

7. A heating valve thermostatic control system according to Claim 6,
**characterised in that** the capillary tube reel (34) is provided on the housing (12) of the sliding control (10).

8. A radiator having a heating valve thermostatic control system according to one of Claims 1 to 7.

9. A radiator according to Claim 8,
**characterised in that** at the bottom of the radiator (110) at least one connection extending into the interior of the radiator is provided for the heating valve (112) and the operating device (114) and also an outwardly protruding connection for an emptying device (118).

## Revendications

1. Système de régulation thermostatique pour vanne de chauffage, comprenant un organe fonctionnel (114) influençant directement la vanne de chauffage (112), un capteur (116) pour la température de l'air, et un dispositif de commande (10) pour le réglage de la valeur de consigne agencé séparément de l'organe fonctionnel (114) et raccordé à celui-ci par un tube capillaire (36), caractérisé par les éléments suivants :
(a) le dispositif de commande adopte la forme d'un régulateur à curseur (10);
(b) le régulateur à curseur (10) présente un curseur (14) à course linéaire, dont le déplacement linéaire est converti, proportionnellement, en une force qui influence un soufflet (32) auquel est raccordé le tube capillaire (36).

2. Système de régulation thermostatique pour vanne de chauffage selon la revendication 1, caractérisé en ce que le curseur (14) est raccordé à une tige (26) dont une extrémité est accouplée à une articulation tournante (28), et est articulé pour pouvoir glisser longitudinalement le long de la tige (26), de façon à ce que la tige (26) pivote dans une direction (B) sensiblement perpendiculaire à la course linéaire (A), autour de l'articulation tournante (28), proportionnellement à la course linéaire (A) du curseur (14), de telle façon que le soufflet (32) soit soumis à l'influence d'une force, proportionnellement à la course linéaire.

3. Système de régulation thermostatique pour vanne de chauffage selon l'une des revendications 1 ou 2, caractérisé en ce que le régulateur à curseur (10) présente un boitier (12) sensiblement plat, qui a de petites dimensions dans une direction (B) perpendiculaire au plan dans lequel s'opère le déplacement linéaire du curseur (14).

4. Système de régulation thermostatique pour vanne de chauffage selon la revendication 3, caractérisé en ce que le boîtier (12) du régulateur à curseur (10) est adapté pour être posé sur ou intégré à un habillage (38) du radiateur.

5. Système de régulation thermostatique pour vanne de chauffage selon l'une des revendications 1 à 4, caractérisé en ce que l'organe fonctionnel (114) et/ou le capteur (116) est/sont adapté(s) pour être placés au-dessous d'un radiateur (110).

6. Système de régulation thermostatique pour vanne de chauffage selon l'une des revendications 1 à 5, caractérisé en ce qu'une partie du tube capillaire (36) est enroulée en bobine (34) et peut être déroulée au moins partiellement de la bobine (34) à des fins d'adaptation aux distances différentes séparant l'organe fonctionnel et le dispositif de commande.

7. Système de régulation thermostatique pour vanne de chauffage selon la revendication 6, caractérisé en ce que la bobine (34) de tube capillaire est prévue sur le boîtier (12) du régulateur à curseur (10).

8. Radiateur équipé d'un système de régulation thermostatique pour vanne de chauffage selon l'une des revendications 1 à 7.

9. Radiateur selon la revendication 8, caractérisé en ce qu'il est prévu, sur le dessous du radiateur (110), au moins un raccord faisant saillie à l'intérieur du radiateur, pour la vanne de chauffage (112) et l'organe fonctionnel (114), ainsi qu'un raccord faisant saillie à l'extérieur, pour un dispositif de purge (118).
